Europäisches Patentamt

(19) European Patent Office

Office européen des brevets

(11) EP 0 898 321 A2

## (12) EUROPEAN PATENT APPLICATION

(43) Date of publication:
24.02.1999 Bulletin 1999/08

(51) Int. Cl.$^6$: H01M 10/34, H01M 4/24

(21) Application number: 98113664.1

(22) Date of filing: 22.07.1998

(84) Designated Contracting States:
AT BE CH CY DE DK ES FI FR GB GR IE IT LI LU MC NL PT SE
Designated Extension States:
AL LT LV MK RO SI

(30) Priority: 22.07.1997 JP 196193/97

(71) Applicant:
Sanyo Electric Co., Ltd.
Moriguchi-shi, Osaka-fu 570-8677 (JP)

(72) Inventors:
• Ise, Tadashi,
  Sanyo Electric Co., Ltd.
  Moriguchi-shi, Osaka-fu (JP)
• Ishimaru, Nobuyasu
  Sanyo Electric Co., Ltd.
  Moriguchi-shi Osaka-fu (JP)
• Kasuga, Hideo
  Sanyo Electric Co., Ltd.
  Moriguchi-shi Osaka-fu (JP)

(74) Representative:
Blumbach, Kramer & Partner GbR
Radeckestrasse 43
81245 München (DE)

(54) **Nickel-hydrogen storage battery**

(57) A nickel-hydrogen storage battery having a positive electrode and a negative electrode composed of a hydrogen absorbing alloy capable of reversibly absorbing and desorbing hydrogen in electrochemical reaction. wherein a ratio of the whole external surface area of the battery to the whole capacity of the battery is defined to be less than 2.5 cm$^2$/cm$^3$, and wherein an amount of electrolyte per 1 Ah capacity of the battery is defined to be more than 1.6 cc/Ah.

Fig. 1

EP 0 898 321 A2

Printed by Xerox (UK) Business Services
2.16.7/3.6

## Description

The present invention relates to a nickel-hydrogen storage battery having a negative electrode comprised of a hydrogen absorbing alloy capable of reversibly absorbing and desorbing hydrogen in electrochemical reaction.

An alkaline storage battery has been widely used as various kinds of electric power source heretofore. Particularly, a small size alkaline storage battery has been adapted for use in various kinds of portable electronic communication equipments, while a large size alkaline storage battery has been adapted for industrial use. In this kind of an alkaline storage battery, a nickel electrode is used as a positive electrode, while a cadmium electrode is used mainly as a negative electrode.

In recent years, a nickel-hydrogen storage battery having a negative electrode comprised of a hydrogen absorbing alloy has been practically used in an alkaline storage battery of high energy density. A Ti-Ni alloy, a La(or Mm)Ni alloy or the like has been used as the hydrogen absorbing alloy for the nickel-hydrogen storage battery. In such conventional nickel-hydrogen storage batteries, a ratio of the whole external surface area of the battery relative to the whole capacity of the battery (hereinafter, referred to a specific surface area) has been reduced to eliminate useless capacity in the battery. This is useful to increase a reaction surface area for obtaining a storage battery of large capacity. However, the thermal radiation area of the battery is reduced in accordance with a reduction of the specific surface area, resulting in rise of the temperature of the battery in charge and discharge operations. If the separator in the battery or the adhesive agent in the electrodes is decomposed due to rise of the temperature, the cycle life of the battery is shortened. Particularly, the cycle life of a nickel-cadmium storage battery is shortened due to rise of the temperature caused by exothermic reaction in discharge operation. Although rise of the temperature of a nickel-hydrogen storage battery in discharge operation is small, there will occur exothermic reaction in charge operation of the battery. Accordingly, if the amount of electrolyte is reduced, an exothermic amount of the battery increases in charge operation, resulting in a decrease of the charging efficiency of the battery and an increase of the internal pressure of the battery.

As a result of investigation of a relationship among the exothermic amount, the thermal radiation amount and the heat storage capacity of the battery, the inventors have found the facts that the exothermic amount is greatly influenced by enthalpy and Joule heat of the battery, that the thermal radiation amount is influenced by the specific surface area of the battery or radiation property of the atmospheric air around the battery and that the heat storage capacity is influenced by the electrolyte of large heat capacity.

The present invention was made on a basis of the foregoing investigation to provide a nickel-hydrogen storage battery of large capacity superior in cycle life in which the exothermic amount, thermal radiation amount and heat storage capacity of the battery are balanced in an optimal value.

According the present invention, there is provided a nickel-hydrogen storage battery having a positive electrode and a negative electrode comprised of a hydrogen absorbing alloy capable of reversibly absorbing and desorbing hydrogen in electrochemical reaction. wherein a ratio of the whole external surface area of the battery to the whole capacity of the battery is defined to be less than 2.5 $cm^2/cm^3$, and wherein an amount of electrolyte per 1 Ah capacity of the battery is defined to be more than 1.6 cc/Ah.

In a practical embodiment of the present invention, either one of the positive and negative electrodes is welded to a positive or negative current collector at one end thereof, and the negative current collector is connected with a negative terminal in the form of a battery casing or a closure element of the battery while the positive current collector is connected with a positive terminal in the form of the closure element of the battery or the battery casing. Alternatively, both the positive and negative electrodes are welded to a positive or negative current collector at their one ends, and the negative current collector is connected with a negative terminal in the form of a battery casing or a closure element of the battery while the positive current collector is connected with a positive terminal in the form of the closure element of the battery or the battery casing.

In the nickel-hydrogen storage battery mentioned above, it is preferable that the positive electrode is in the form of a sintered type electrode.

According to an aspect of the present invention, the negative electrode is comprised of a hydrogen storage alloy the enthalpy change ($\Delta$H) of which becomes equal to or more than - 38.5 kJ/mol when hydrogen is being absorbed in the negative electrode. Preferably, an equilibrium pressure P of the negative electrode at 40°C is defined in a relationship of 0.02 MPa $\leq$ P $\leq$ 0.07 MPa, and an amount of electrolyte impregnated in the negative electrode is defined to be 5-11 wt.% to the weight of the negative electrode in a dry condition.

According to another aspect of the present invention, the length of the positive electrode is defined to be more than 0.6 relative to the cross-sectional area of the battery, and an entropy change of the battery at charging is defined to be more than 10 J/molK.

For a better understanding of the present invention, and to show how the same may be carried into effect, reference will now be made, by way of example, to the accompanying drawing, in which a nickel-hydrogen storage battery according to the present invention is illustrated in a broken condition.

Hereinafter, a preferred embodiment of the present invention will be described in detail with reference to the accompanying drawing.

1. Manufacture of Hydrogen absorbing alloy:

(a) Hydrogen absorbing alloy A:

Misch metal (Mm: a mixture of rare earth elements), nickel (Ni), cobalt (Co), aluminum (Al) and manganese (Mn) were mixed at a ratio by element of 1.2 : 3.7 : 0.5 : 0.2 : 0.6, and the mixture was heated in a high frequency induction furnace of argon gas atmosphere to produce an amount of molten alloy. Thus, the molten alloy was cooled by pouring into a cold metallic roller and subjected to a heat treatment at 1,000 °C for 10 hours in the atmosphere of hydrogen gas (latm) to produce an ingot of hydrogen-absorbing alloy represented by composition formula $Mm_{1.2}Ni_{3.7}Co_{0.5}Al_{0.2}Mn_{0.6}$. The ingot of 1 kg was added with water of 1 liter and pulverized in a ball-mill into hydrogen-absorbing powder of about 50 $\mu$m in average particle size. Hereinafter, the hydrogen-absorbing powder is referred to a hydrogen-absorbing alloy A.

(b) Hydrogen-absorbing alloy B:

Misch metal (Mm: a mixture of rare earth elements), nickel (Ni), cobalt (Co), aluminum (Al) and manganese (Mn) were mixed at a ratio by element of 1.2 : 3.6 : 0.6 : 0.2 : 0.6, and the mixture was heated in a high frequency induction furnace of argon gas atmosphere to produce an amount of molten alloy. Thus, the molten alloy was cooled by pouring into a cold metallic roller and subjected to a heat treatment at 1,000 °C for 10 hours in the atmosphere of hydrogen gas (latm) to produce an ingot of a hydrogen-absorbing alloy represented by composition formula $Mm_{1.2}Ni_{3.6}Co_{0.6}Al_{0.2}Mn_{0.6}$. The ingot of 1 kg was added with water of 1 liter and pulverized by a ball-mill into hydrogen-absorbing alloy powder of about 50 $\mu$m in average particle size. Hereinafter, the hydrogen-absorbing alloy powder is referred to a hydrogen-absorbing alloy B.

(c) Hydrogen-absorbing alloy C:

Misch metal (Mm: a mixture of rare earth elements), nickel (Ni), cobalt (Co), aluminum (Al) and manganese (Mn) were mixed at a ratio by element of 1.0 : 3.6 : 0.6 : 0.2 : 0.6, and the mixture was heated in a high frequency induction furnace of argon gas atmosphere to produce an amount of molten alloy. Thus, the molten alloy was cooled by pouring into a cold metallic roller and subjected to a heat treatment at 1,000 °C for 10 hours in the atmosphere of hydrogen gas (latm) to produce an ingot of a hydrogen-absorbing alloy represented by composition formula $Mm_{1.0}Ni_{3.6}Co_{0.6}Al_{0.2}Mn_{0.6}$. The ingot of 1 kg was added with water of 1 liter and pulverized by a ball-mill into hydrogen-absorbing alloy powder of about 50 $\mu$m in average particle size. Hereinafter, the hydrogen-absorbing alloy powder is referred to a hydrogen-absorbing alloy C.

(d) Hydrogen-absorbing alloy D:

Misch metal (Mm: a mixture of rare earth elements), nickel (Ni), cobalt (Co), aluminum (Al) and manganese (Mn) were mixed at a ratio by element of 0.9 : 3.6 : 0.6 : 0.2 : 0.6, and the mixture was heated in a high frequency induction furnace of argon gas atmosphere to produce an amount of molten alloy. Thus, the molten alloy was cooled by pouring into a cold metallic roller and subjected to a heat treatment at 1,000 °C for 10 hours in the atmosphere of hydrogen gas (latm) to produce an ingot of a hydrogen-absorbing alloy represented by composition formula $Mm_{0.9}Ni_{3.6}Co_{0.6}Al_{0.2}Mn_{0.6}$. The ingot of 1 kg was added with water of 1 liter and pulverized by a ball-mill into hydrogen-absorbing alloy powder of about 50 $\mu$m in average particle size. Hereinafter, the hydrogen-absorbing alloy powder is referred to a hydrogen-absorbing alloy D.

(e) Hydrogen-absorbing alloy E:

Misch metal (Mm: a mixture of rare earth elements), nickel (Ni), cobalt (Co), aluminum (Al) and manganese (Ma) were mixed at a ratio by element of 0.8 : 3.6 : 0.6 : 0.2: 0.6, and the mixture was heated in a high frequency induction furnace of argon gas atmosphere to produce an amount of molten alloy. Thus, the molten alloy was cooled by pouring into a cold metallic roller and subjected to a heat treatment at 1,000 °C for 10 hours in the atmosphere of hydrogen gas (latm) to produce an ingot of a hydrogen-absorbing alloy represented by composition formula $Mm_{0.8}Ni_{3.6}Co_{0.6}Al_{0.2}Mn_{0.6}$. The ingot of 1 kg was added with water of 1 liter and pulverized by a ball-mill into hydrogen-absorbing alloy powder of about 50 $\mu$m in average particle size. Hereinafter, the hydrogen-absorbing alloy powder is referred to a hydrogen-absorbing alloy E.

(f) Hydrogen-absorbing alloy F:

Misch metal (Mm: a mixture of rare earth elements), nickel (Ni), cobalt (Co), aluminum (Al) and manganese (Mn) were mixed at a ratio by element of 1.2 : 3.6 : 0.8 : 0.2 : 0.6, and the mixture was heated in a high frequency induction furnace of argon gas atmosphere to produce an amount of molten alloy. Thus, the molten alloy was cooled by pouring into a cold metallic roller and subjected to a heat treatment at 1,000 °C for 10 hours in the atmosphere of hydrogen gas (latm) to produce an ingot of a hydrogen-absorbing alloy represented by composition formula $Mm_{1.2}Ni_{3.6}Co_{0.8}Al_{0.2}Mn_{0.6}$.. The ingot of 1 kg was added with water of 1 liter and pulverized by a ball-mill into hydrogen-absorbing alloy powder of about 50 $\mu$m in average particle size. Hereinafter, the hydrogen-absorbing alloy powder is referred to a hydrogen-absorbing alloy F.

2. Measurement of an equilibrium pressure of hydrogen and an enthalpy change in hydrogen-absorbing alloys:

Each hydrogen-absorbing characteristic of the hydrogen-absorbing alloys A-F was measured respectively at 40 °C and 60 °C by using a Sieverts' device. A result of the measurement is shown in the following Table 1 in which an equilibrium pressure (P) represents a hydrogen-absorbing pressure (MPa: Mega-Pascal) at 40 °C in a condition where H/M (a hydrogen-absorbing atomic weight per one atom composing a hydrogen-absorbing alloy) is represented by 0.5. In the measurement, a temperature (1/T) and an equilibrium pressure (1nP) were plotted on a basis of the equilibrium pressure respectively at 40 °C and 60 °C to calculate an enthalpy change ($\Delta$H) based on the following equation (1).

$$1nP = (\Delta H/RT) - (\Delta S/R) \tag{1}$$

In the equation (1), T represents an absolute temperature, R represents a gas constant (R = 8.31451 J/K mol), $\Delta$H was obtained by an inclination of (1nP) and (1/T), and $\Delta$S represents each entropy change of the hydrogen-absorbing alloys. After the value of $\Delta$H was obtained, the value of $\Delta$S was obtained by substitution of the temperature (T) and the equilibrium pressure (P) at 40 °C into the equation (1).

Table 1

| Hydrogen-absorbing alloy | Heat treatment | Equilibrium pressure (P) (MPa) | Enthalpy ($\Delta$H) (kJ/mol) |
|---|---|---|---|
| A | Yes | 0.020 | -37.0 |
| B | Yes | 0.020 | -38.5 |
| C | Yes | 0.050 | -38.0 |
| D | Yes | 0.065 | -38.0 |
| E | Yes | 0.075 | -38.5 |
| F | No | 0.028 | -39.8 |

3. Manufacture of Negative electrode of Hydrogen-absorbing alloy:

The hydrogen-absorbing alloy powders A-F each were mixed with 30% aqueous solution of 5 wt.% polyethylene oxide powders and kneaded to prepare an active material paste for a negative electrode. The active material paste was coated on opposite surfaces of a punched sheet metal, rolled under pressure in predetermined thickness and dried to produce six kinds of negative electrodes of hydrogen-absorbing alloys. The six kinds of negative electrodes were cut into five kinds of sizes respectively corresponding with sintered type nickel positive electrodes 12 described below.

4. Manufacture of Nickel-hydrogen storage battery:

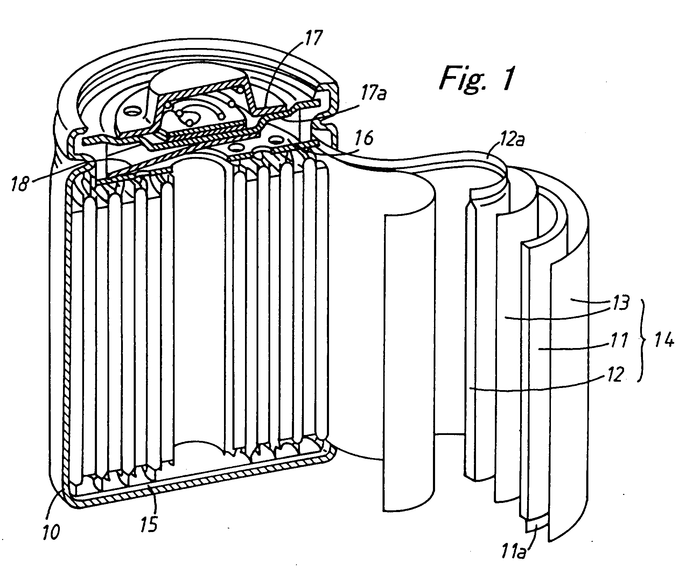

As shown in Fig. 1, the six kinds of negative electrodes 11 each were rolled up with each of sintered type nickel positive electrodes 12 cut into five kinds of sizes (520mm x 49mm; 270mm x 35mm; 126mm x 60mm; 83mm x 42mm; 47mm x 37mm) through a separator 13 made of a unwoven alkali resistance fiber. In this instance, the negative and positive electrodes 11 and 12 were rolled up in such a manner that the negative electrode 11 is located outside. Thus, six kinds of spiral electrode groups 14 were produced in five kinds of sizes.
Thereafter, the negative electrode 11 of each spiral electrode group 14 was welded to a perforated circular negative current collector plate 15 at its lower end 11a, while the positive electrode 12 was welded to a perforated circular positive current collector plate 16 at its upper end 12a. On the other hand, five kinds of bottomed cylindrical metallic outer casings 10 were prepared in five kinds of sizes α-ε shown in the following Table 2. Thus, each spiral electrode group 14 welded to the current collector plates 15 and 16 was inserted into each of the outer casings 10, and the negative current collector plate 15 was welded to a bottom of the outer casing 10 while the positive current collector plate 16 was connected to a bottom 17a of a closure plate 17 through a collector lead plate 18. Thereafter, the outer casings 10 were filled with electrolyte such as aqueous solution of 30 wt% potassium hydroxide (KOH) in amount of 1.6 cc per 1 Ah capacity of the battery and sealed to produce nickel-hydrogen storage batteries respectively numbered with 1 to 8. For comparison with the storage batteries, the outer casings 10 were also filled with the aqueous solution of 30 wt.% potassium hydroxide (KOH) in amount of 1.5 cc per 1 Ah capacity of the battery and sealed to produce nickel-hydrogen storage batteries respectively numbered with 9 to 12.

Table 2

| Battery size | Height (mm) | Diameter (mm) | Volume (cm$^3$) | Surface area (cm$^2$) | Specific surface area (cm$^2$/cm$^3$) | Capacity (AH) |
|---|---|---|---|---|---|---|
| α | 61.5 | 33.0 | 52.57 | 80.82 | 1.5374 | 7.5 |
| β | 42.0 | 22.0 | 15.96 | 36.61 | 2.2939 | 2.4 |
| γ | 66.0 | 16.5 | 14.11 | 38.47 | 2.7264 | 2.0 |
| δ | 49.5 | 13.8 | 7.40 | 24.44 | 3.3027 | 1.0 |
| ε | 43.7 | 10.0 | 3.43 | 15.29 | 4.4577 | 0.48 |

As shown in Table 2, it has been found that the capacity of the battery is increased in accordance with a decrease of a specific surface area of the battery or a ratio of the whole external surface of the battery relative to the whole capacity of the same. Accordingly. to obtain a nickel-hydrogen storage battery of lager capacity than that of a conventional nickel-hydrogen storage battery, it is required to determine the specific surface area of the battery less than 2.5 cm$^2$/cm$^3$.

5. Activation of Battery:

The nickel-hydrogen storage batteries each were charged at a current of 0.1 C for 16 hours and rested for one hour. Thereafter, the batteries each were discharged at a current of 0.2 C until an end-voltage of the battery becomes 1.0 V and rested from one hour. The charge-discharge cycle was repeated three times to activate the nickel-hydrogen batteries respectively.

6. Experiment of Battery characteristics:

(1) Entropy change of the battery:

After charged at 50%, the activated nickel-hydrogen storage batteries each were retained for three hours respectively at -20 °C, -10 °C and 0 °C to measure each open circuit voltage (E) of the batteries. Thus, each entropy change of the batteries in discharge operation was calculated on a basis of the following equation (2).

$$\Delta S = zF \, (\partial E/\partial T)_p \, (\text{J/molK}) \tag{2}$$

where "z" represents the number of electron (in this case, the number of hydrogen atom is represented as z = 1), "F" represents a Faraday constant (F = 96500), and P represents a constant pressure state. Since the entropy change (ΔS) at a negative sign represents exothermic reaction at discharge of the battery, the exothermic amount of the battery is represented by a value of TΔS.

(2) Experiment of Temperature rise of the batteries in discharge operation at a higher rate:

The activated nickel-hydrogen storage batteries each were charged at a current of 0.1 C for 16 hours and rested for one hour. Thereafter, the batteries each were discharged at a current of 4 C, and rise of the temperature of the respective batteries from a room temperature was measured after lapse of five minutes from start of the discharge.

(3) Measurement of internal pressure of the batteries in charge operation:

The activated nickel-hydrogen storage batteries each were charged at a current of 1 C. When the batteries each were fully charged, each internal pressure of the batteries was measured by a pressure sensor inserted into the bottom of each outer casing 10 of the batteries.

(4) Experiment of Cycle characteristic

The activated nickel-hydrogen storage batteries each were charged at a current of 1 C and rested for one hour after the battery voltage decreased lower in 10 mV than a maximum voltage. Thereafter, the batteries each were discharged at a current of 1 C until an end-voltage becomes 1.0 V and rested for one hour after discharged. The charge-discharge cycle was repeated at a room temperature so that a period of time during which the capacity of the battery is decreased to 60% of its initial capacity is measured as a cycle lift of the battery.

7. Result of Experiments:

Listed on the following Table 3 are rise of the temperature of the nickel-hydrogen storage batteries respectively produced in the size $\alpha$ (33mm in diameter, 61.5mm in height) and in the size $\beta$ (22mm in diameter, 42mm in height) in discharge operation in a condition where the amount of electrolyte was adjusted to 1.6 cc and 1.5 cc respectively per 1 Ah of the battery, and each internal pressure and cycle life of the batteries.

Table 3

| Battery Number | Size | Alloy | Amount of electrolyte (cc) | Rise of temperature (°C) | Internal pressure (kg/cm$^2$) | Cycle life |
|---|---|---|---|---|---|---|
| 1 | $\alpha$ | A | 1.6 | 12 | 8.0 | 800 |
| 2 | $\beta$ | A | 1.6 | 11 | 8.0 | 800 |
| 3 | $\alpha$ | B | 1.6 | 9 | 5.5 | 1000 |
| 4 | $\beta$ | B | 1.6 | 8 | 5.0 | 1000 |
| 5 | $\beta$ | C | 1.6 | 8 | 5.0 | 1000 |
| 6 | $\beta$ | D | 1.6 | 8 | 5.5 | 1000 |
| 7 | $\beta$ | E | 1.6 | 8 | 7.0 | 900 |
| 8 | $\beta$ | F | 1.6 | 8 | 7.0 | 900 |
| 9 | $\alpha$ | A | 1.5 | 13 | 12.0 | 300 |
| 10 | $\beta$ | A | 1.5 | 12 | 12.0 | 300 |
| 11 | $\alpha$ | B | 1.5 | 10 | 10.0 | 500 |
| 12 | $\beta$ | B | 1.5 | 9 | 10.0 | 500 |

As shown in Table 3, it has been found that the nickel-hydrogen storage batteries numbered with 1 to 8, filled with electrolyte in amount of 1.6 cc per 1 Ah capacity of the battery, was superior in rise of the temperature at discharging, the internal pressure at charging and the cycle lift in comparison with the nickel-hydrogen storage batteries numbered with 9 to 12. In this respect, it is believed that the result of the foregoing experiments is obtained for the following reasons.

Even if the batteries were the same in radiation property, the heat storage capacity of the batteries would be greatly influenced by the amount of electrolyte largest in heat capacity. As a result, if the amount of electrolyte is decreased as in the batteries numbered with 9 to 12, the heat storage capacity is decreased, resulting in an increase of the temperature rise at discharging. If rise of the temperature increased at discharging, the separator in the battery and the binder in the electrodes would be decomposed in a short period of time, resulting in shortening of the cycle life of the battery. In addition, if the amount of electrolyte is decreased as in the batteries numbered with 9 to 12, the exothermic amount of the battery at charging is increased by exothermic reaction, resulting in deterioration of the charging efficiency and an increase of the internal pressure of the battery.

In contrast with the above facts, if the amount of electrolyte was increased as in the batteries numbered with 1 to 8, the heat storage capacity of the batteries would be increased, resulting in a decrease of rise of the temperature at discharging. This is effective to enhance the charging efficiency of the battery and to restrain rise of the temperature at charging and discharging and rise of the internal pressure at charging. In nickel-hydrogen storage batteries of more than 2.5 cm$^2$/cm$^3$ in specific surface area respectively produced in sizes $\gamma$, $\delta$ and $\varepsilon$ (not shown in Table 3), any problem caused by a difference in the amount of electrolyte was not found since the specific surface area was sufficient for radiation of the battery.

In comparison of the batteries of the same size $\beta$ numbered with 2 and 4-8, it has been found that the battery numbered with 4 (Hydrogen-absorbing alloy B: Enthalpy change $\Delta H$ = -38.5 kJ/mol, Equilibrium pressure P = 0.020 MPa), the battery numbered with 5 (Hydrogen-absorbing alloy C: Enthalpy change $\Delta H$ = -38.0 kJ/mol. Equilibrium pressure P = 0.050 MPa) and the battery numbered with 6 (Hydrogen-absorbing alloy D: Enthalpy change $\Delta H$ = -38.0 kJ/mol, Equilibrium pressure P = 0.065 MPa) were superior than the other nickel-hydrogen storage batteries in rise of the temperature at discharging, the internal pressure at charging and the cycle lift.

Accordingly, in the case that in a nickel-hydrogen storage battery of less than 2.5 cm$^2$/cm$^3$ in specific surface area, the amount of electrolyte is defined more than 1.6 cc per 1 Ah capacity of the battery and that the battery is produced by using a hydrogen-absorbing alloy the enthalpy change ($\Delta H$) of which is defined as -38.5 kJ/mol $\leq \Delta H$ and the equilibrium pressure of which is 0.02 to 0.07 MPa at 40 °C, the exothermic amount, thermal radiation amount and heat storage capacity of the battery are balanced in an optimum value to restrain rise of the internal pressure at charging and rise of the temperature at discharging and to enhance the cycle life of the battery.

(2) Relationship of the current collector plate to rise of the temperature at discharging, the internal pressure at charging and the cycle life of the battery:

In a nickel-hydrogen storage battery of 2.2939 cm$^2$/cm$^3$ in specific surface area produced in the size $\beta$, the battery having a negative electrode comprised of the hydrogen-absorbing alloy B (Enthalpy change $\Delta H$ = -38.5 kJ/mol, Equilibrium pressure P = 0.020 MPa) and filled with electrolyte in amount of 1.6 cc per 1 Ah capacity of the battery, rise of the temperature at discharging, the internal pressure at charging and the cycle life were measured in relation to the current collector plate of the battery. A result of the measurement is shown in the following Table 4.

Table 4

| Battery number | Current collector | Positive electrode | Amount of electrolyte (cc) | Rise of temparature (°C) | Internal pressure kg/cm$^2$ | Cycle life (cycle) |
|---|---|---|---|---|---|---|
| 13 | -- | sintered | 1.6 | 10 | 7.0 | 900 |
| 14 | positive | sintered | 1.6 | 9 | 6.0 | 950 |
| 15 | negative | sintered | 1.6 | 9 | 6.0 | 950 |
| 16 | both | sintered | 1.6 | 8 | 5.0 | 1000 |
| 17 | both | non-sintered | 1.6 | 10 | 7.0 | 900 |

As shown in Table 4, it has been found that the nickel-hydrogen storage batteries (numbered with 14, 15 and 16) using the circular current collector plates 15 and 16 are superior than a nickel-hydrogen storage battery (numbered with 13) using a conventional current collector plate in rise of the temperature at discharging, the internal pressure at charging and the cycle life. It has been also found that the nickel-hydrogen storage battery (numbered with 16) having negative and positive electrodes 11 and 12 respectively connected to the circular current collector plates 15 and 16 was superior than the nickel-hydrogen storage battery (numbered with 14) having a positive electrode connected to the circular current collector plate 16 or the nickel-hydrogen storage battery (numbered with 15) having a negative electrode 11 connected to the circular current collector plate 15 in rise of the temperature at discharging, the internal pressure at charging and the cycle life. In this respect, it is believed that these facts were caused for the following reasons.

In the nickel-hydrogen storage battery using the circular current collector plate 15 or 16, the resistance at the current collecting portion is decreased so that the occurrence of Joule heat is restrained to decrease rise of the temperature at charging. This is effective to restrain the occurrence of hydrogen gas caused by rise of the temperature at the end of charging and to restrain an increase of the internal pressure at charging. Accordingly, in the case that at least either one of the negative and positive electrodes 11 and 12 is connected at its one end to the circular current collector plate 15 or 16, the resistance at the current collecting portion is decreased. Furthermore, in the case that both the negative and positive electrodes 11 and 12 are connected at their one ends to the circular current collector plates 15 and 16, the resistance at the current collecting portion is further decreased.

In Table 4, it has been also found that the nickel-hydrogen storage battery (numbered with 16) using the sintered type nickel electrode as the positive electrode was superior than the nickel-hydrogen storage battery (numbered with 17) using the non-sintered type nickel electrode as the positive electrode in rise of the temperature at discharging, the internal pressure at charging and the cycle life. That is to say, in the nickel-hydrogen storage battery using the sintered type nickel electrode, the internal resistance of the positive electrode is decreased so that the exothermic amount is reduced to restrain the occurrence of hydrogen gas caused by rise of the temperature. This is effective to restrain an increase of the internal pressure at charging.

(3) Relationship of an equilibrium voltage and an enthalpy change to rise of the temperature at discharging, the internal pressure at charging and the cycle life:

In the nickel-hydrogen storage battery of the size β (Specific surface area: 2.2939 $cm^2/cm^3$) filled with electrolyte in amount of 1.6 cc per 1 Ah capacity of the battery, an equilibrium voltage and an enthalpy change were measured in relation to rise of the temperature at discharging, the internal pressure at charging and the cycle life. A result of the measurement is shown in the following Table 5.

Table 5

| Battery number | Alloy | Equilibrium pressure (MPa) | Enthalpy change KJ/mol | Rise of Temp. (°C) | internal pressure kg/cm2 | Cycle life |
|---|---|---|---|---|---|---|
| 18 | A | 0.020 | -37.0 | 11 | 8.0 | 800 |
| 19 | B | 0.020 | -38.5 | 8 | 5.0 | 1000 |
| 20 | C | 0.050 | -38.0 | 8 | 5.0 | 1000 |
| 21 | D | 0.065 | -38.0 | 8 | 5.5 | 1000 |
| 22 | E | 0.075 | -38.0 | 8 | 7.0 | 900 |
| 23 | F | 0.028 | -39.0 | 8 | 7.0 | 900 |

As shown in Table 5, it has been found that the nickel-hydrogen storage batteries using the hydrogen-absorbing alloys B, C, D are superior than the nickel-hydrogen storage batteries using the hydrogen-absorbing alloys A, E, F in rise of the temperature at discharging, the internal pressure at charging and the cycle life. It is, therefore, desirable that the enthalpy change ΔH of the hydrogen-absorbing alloy negative electrode is defined in a relationship of -38.5 kJ/mol ≦ ΔH. It is also desirable that the equilibrium pressure P of the hydrogen-absorbing alloy negative electrode at 40 °C is defined in a relationship of 0.02 MPa ≦ P ≦ 0.07 MPa. If the enthalpy change ΔH is less than -38.5 kJ/mol or the equilibrium pressure P is more than 0.07 MPa, the internal pressure at charging is increased, resulting in deterioration of the cycle life. If the equilibrium pressure P is less than 0.02 MPa, the voltage of the battery in operation is decreased, resulting in a decrease of the output of the battery.

(4) Relationship of an impregnation rate of electrolyte in the negative electrode to rise of the temperature at discharging, the internal pressure at charging and the cycle life:

In the nickel-hydrogen storage battery of the size β (Specific surface area: 2.2939 $cm^2/cm^3$ using the negative electrode of the hydrogen-absorbing alloy B (Enthalpy change ΔH = -38.5 kJ/mol, Equilibrium pressure P = 0.020 MPa) and filled with electrolyte in amount of 1.6 cc per 1 Ah of the battery, an impregnation rate of electrolyte in the negative electrode (a ratio by weight of electrolyte impregnated in the negative electrode relative to the weight of the negative electrode in a dry condition) was measured in relation to rise of the temperature at discharging, the internal pressure at charging and the cycle life. A result of the measurement is shown in the following Table 6.

Table 6

| Battery number | Impregnation rate (wt.%) | Amount of electrolyte (cc) | Rise of temp. (°C) | Internal pressure kg/cm$^2$ | Cycle life |
|---|---|---|---|---|---|
| 24 | 4 | 1.6 | 8 | 7.0 | 900 |
| 25 | 5 | 1.6 | 8 | 5.0 | 1000 |
| 26 | 8 | 1.6 | 8 | 5.0 | 1000 |
| 27 | 11 | 1.6 | 8 | 5.0 | 1000 |
| 28 | 12 | 1.6 | 8 | 7.0 | 900 |

As shown in Table 6, it has been found that the nickel-hydrogen storage batteries numbered with 25, 26 and 27 were superior than the nickel-hydrogen storage batteries numbered with 24 and 28 in rise of the temperature at discharging, the internal pressure at charging and the cycle life. It is, therefore, desirable that the impregnation rate of electrolyte in the negative electrode is defined to be 5 to 11 wt.%. If the impregnation rate of electrolyte in the negative electrode is less than 5 wt.%, the charging efficiency at the negative electrode is decreased, resulting in the occurrence of hydrogen gas and an increase of the internal pressure. If the impregnation rate of electrolyte in the negative electrode is more than 11 wt.%, the absorption efficiency of oxygen gas is decreased due to reduction of three phase boundary surfaces of gas, liquid and solid phase, resulting in an increase of the internal pressure of the battery.

(5) Relationship of a ratio (y/x) of the length (y) of the positive electrode to the cross-sectional area of the battery to rise of the temperature at discharging, the internal pressure at charging and the cycle life:

In the nickel-hydrogen storage battery of the size β (Specific surface area: 2.2939 cm$^2$/cm$^3$) using the negative electrode of the hydrogen-absorbing alloy B (Enthalpy change ΔH = -38.5 kJ/mol, Equilibrium pressure P = 0.020 MPa) and filled with electrolyte in amount of 1.6 cc per 1 Ah of the battery, a ratio (y/x) of the length (y mm) of the positive electrode to the cross-sectional area (x mm$^2$) of the battery was measured in relation to rise of the temperature at discharging, the internal pressure at charging and the cycle life. A result of the measurement is shown in the following Table 7. In this measurement, the ratio (y/x) of the length of the positive electrode to the cross-sectional area was changed by adjustment of the thickness and length of the positive electrode.

Table 7

| Battery number | y/x | Rise of temp. (°C) | Internal pressure (kg/cm$^2$) | Cycle life |
|---|---|---|---|---|
| 29 | 0.5 | 11 | 8.0 | 800 |
| 30 | 0.6 | 9 | 6.0 | 950 |
| 31 | 0.7 | 8 | 5.0 | 1000 |
| 32 | 0.8 | 8 | 5.0 | 1000 |

As shown in Table 7, it has been found that a nickel-hydrogen storage battery superior in rise of the temperature at discharging, the internal pressure at charging and the cycle life is obtainable in a condition where the ratio (y/x) of the length of the positive electrode to the cross-sectional area is determined to be more than 0.6, preferably more than 0.7. Since a surface area between the electrodes in the battery is increased by an increase of the ratio (y/x) of the length of the positive electrode to the cross-sectional area, voltage drop between the electrodes is restrained, and the occurrence of Joule heat in the battery is restrained. This is effective to restrain rise of the temperature at discharging and the internal pressure at charging and to prolong the cycle life.

(6) Relationship of an entropy change of the nickel-hydrogen storage battery at discharging to rise of the temperature at discharging, the internal pressure at charging and the cycle life:

In the nickel-hydrogen storage battery of the size β (Specific surface area: 2.2939 cm$^2$/cm$^3$) filled with electro-

lyte in amount of 1.6 cc per 1 Ah capacity of the battery, an entropy change ΔS (J/molK) at discharging was measured in relation to rise of the temperature at discharging, the internal pressure at charging and the cycle life. A result of the measurement is shown in the following Table 8. In the nickel-hydrogen storage batteries numbered with 38 and 39 in Table 8, the entropy change ΔS at the positive electrode was 10 (J/molK) and 8 (J/molK), respectively. In this instance, the entropy change ΔS was increased by an increase of the additional ratio of cobalt in the positive electrode and decreased by a decrease of the additional ratio of cobalt in the positive electrode.

Table 8

| Battery number | Alloy | Entropy change (ΔS) J/molK | Rise of temp. (°C) | Internal pressure (kg/cm$^2$) | Cycle life |
|---|---|---|---|---|---|
| 33 | A | 8 | 13 | 8.0 | 800 |
| 34 | B | 10 | 8 | 5.5 | 1000 |
| 35 | C | 12 | 8 | 5.0 | 1000 |
| 36 | D | 12 | 8 | 5.0 | 1000 |
| 37 | E | 10 | 8 | 7.0 | 900 |
| 38 | A | 10 | 8 | 5.0 | 1000 |
| 39 | B | 8 | 13 | 8.0 | 800 |

As shown in Table 8, it has been found that the nickel-hydrogen storage batteries numbered with 34 to 38 are superior than the nickel-hydrogen storage batteries numbered with 33 and 39 in rise of the temperature at discharging, the internal pressure at charging and the cycle life. It is, therefore, desirable that the entropy change (ΔS) at the positive or negative electrode of the nickel-hydrogen storage battery is determined to be more than 10 J/molK, preferably in a relationship of 10 J/molK < ΔS < 12 J/molK.

## Claims

1. A nickel-hydrogen storage battery having a positive electrode and a negative electrode composed of a hydrogen absorbing alloy capable of reversibly absorbing and desorbing hydrogen in electrochemical reaction. wherein a ratio of the whole external surface area of the battery to the whole capacity of the battery is defined to be less than 2.5 cm$^2$/cm$^3$, and wherein an amount of electrolyte per 1 Ah capacity of the battery is defined to be more than 1.6 cc/Ah.

2. A nickel-hydrogen storage battery as recited in claim 1, wherein either one of the positive and negative electrodes is welded to a positive or negative current collector at one end thereof, and wherein the negative current collector is connected with a negative terminal in the form of a battery casing or a closure plate or element of the battery, while the positive current collector is connected with a positive terminal in the form of the closure plate of the battery or the battery casing.

3. A nickel-hydrogen storage battery as recited in claim 1, wherein both the positive and negative electrodes are welded to a positive or negative current collector at their one ends, and wherein the negative current collector is connected with a negative terminal in the form of a battery casing or a closure plate or element of the battery, while the positive current collector is connected with a positive terminal in the form of the closure plate of the battery or the battery casing.

4. A nickel-hydrogen storage battery as recited in claim 1, wherein the positive electrode is in the form of a sintered type electrode.

5. A nickel-hydrogen storage battery as recited in claim 1, wherein the negative electrode is comprised of a hydrogen storage alloy the enthalpy change (ΔH) of which becomes equal to or more than - 38.5 kJ/mol when hydrogen is being absorbed in the negative electrode.

6. A nickel-hydrogen storage battery as recited in claim 1, wherein an equilibrium pressure P of the negative electrode at 40 °C is defined in a relationship of $0.02\ MPa \leqq P \leqq 0.07\ MPa$.

7. A nickel-hydrogen storage battery as recited in claim 1, wherein an amount of electrolyte impregnated in the negative electrode is defined to be 5-11 wt.% to the weight of the negative electrode in a dry condition.

8. A nickel-hydrogen storage battery as recited in claim 1, wherein the length of the positive electrode is defined to be more than 0.6 relative to the cross-sectional area of the battery.

9. A nickel-hydrogen storage battery as recited in claim 1, wherein the length of the positive electrode is defined to be more than 0.7 relative to the cross-sectional area of the battery.

10. A nickel-hydrogen storage battery as recited in claim 1, wherein an entropy change of the battery is defined at discharging to be more than 10 J/molK.

Fig. 1

EP 0 898 321 A2